# EUROPÄISCHE PATENTSCHRIFT

(11) **EP 1 318 105 B1**
(45) Veröffentlichungstag und Bekanntmachung des Hinweises auf die Patenterteilung: **10.12.2008**
(21) Anmeldenummer: 02005073.8
(22) Anmeldetag: 06.03.2002
(51) Int. Cl.: C02F 1/20

(54) **Verfahren und Vorrichtung zur Entfernung von Ammonium aus Abwässern und zur Wertstoffgewinnung**
Process and device for the removal of ammonia from wastewater and the recovery of valuable material
Procédé et dispositif pour l'élimination d'ammoniaque des eaux usées et pour la récupération de matières utiles

(30) Priorität: 05.12.2001 DE 10159734
(43) Veröffentlichungstag der Anmeldung: 11.06.2003
(73) Patentinhaber: Mackowiak, Jerzy, Dr.-Ing. habil., 44801 Bochum (DE)
(72) Erfinder: Mackowiak, Jerzy, Dr.-Ing. habil., 44801 Bochum (DE)
(74) Vertreter: Volpert, Marcus

(56) Entgegenhaltungen:
- DE-A- 19 511 179
- DE-C- 4 239 637
- DE-C- 4 324 410
- GB-A- 1 416 920
- MACKOWIAK J: "Betriebserfahrungen mit Verfahren zur Ammmoniumentfernung aus Abwässern und Abluft" STICKSTOFFRÜCKBELASTUNG - STAND DER TECHNIK 1998, ERWEITERTER TAGUNGSBAND ZUR 3. AACHENER TAGUNG MIT INFORMATIONSFORUM AM 10./11.03.1998 IM TECHNOLOGIEZENTRUM AM EUROPAPLATZ, AACHEN, 1998, Seiten 209-226, XP002234377
- MACKOWIAK J: "Fachbeitrag Nr. 9: Modulare Teilstrombehandlungsanlage (EMBTA) zur Stickstoffelimination aus dem Zentratwasser mit Wertstoffgewinnung" IN: STICKSTOFFRÜCKBELASTUNG - STAND DER TECHNIK 1999, ERWEITERTER TAGUNGSBAND ZUR 4. AACHENER TAGUNG MIT INFORMATIONSFORUM AM 15./16.06.1999 IM TECHNOLOGIEZENTRUM AM EUROPAPLATZ, AACHEN, 1999, Seiten 1-10, XP002234226
- PATENT ABSTRACTS OF JAPAN vol. 2000, no. 16, 8. Mai 2001 (2001-05-08) & JP 2001 017958 A (JAPAN ORGANO CO LTD), 23. Januar 2001 (2001-01-23)

## Beschreibung

Die Erfindung bezieht sich auf ein Verfahren zur Entfernung von Ammonium (NH₄) aus Abwässern, insbesondere aus dem Zentratwasser einer Kläranlage, und zur Wertstoffgewinnung nach dem Oberbegriff des Patentanspruchs 1 sowie auf eine Vorrichtung zum Durchführen eines solchen Verfahrens nach dem Oberbegriff des Patentanspruchs 8.

Eine Reduzierung des Ammoniak- bzw. Ammoniumgehalts in Abwässern ist vor allem aus umweltschutztechnischen Gründen geboten, da die genannten Stoffe Sauerstoff binden, welcher in den teilweise empfindlichen Ökosystemen dann Flora und Fauna nicht mehr zur Verfügung steht. Ein Verfahren der eingangs erwähnten Art ist beispielsweise aus den Veröffentlichungen des Anmelders mit dem Titel "Weg mit dem Ammonium - Modulare Teilstrom-Behandlungsanlage zur Stickstoffelimination aus Zentratwasser mit Wertstoffgewinnung" in Verfahrenstechnik 34 (2000) Nr. 5, Seite 22, 23 und mit dem Titel "Teilstrombehandlungsanlage zur Entlastung von Kläranlagen" in Umwelt, Bd. 30 (2000) Nr. 7/8, Seite 46, 47 bekannt. Das darin beschriebene Verfahren dient insbesondere dazu, kommunale, nach der Schlammkonditionierung meist in erheblichem Maße mit Ammoniak (NH₃) beladene Abwässer vor der Rückführung zur biologischen Aufbereitung des Abwassers so aufzubereiten, daß der Ammoniakgehalt deutlich reduziert ist. Dies gilt in entsprechender Weise für mit Ammonium (NH₄) beladene Abwässer.

Ein weiteres, dreistufiges Verfahren zur Ammoniumentfernung aus Faul- und Trübwässern ist aus der Publikation "Betriebserfahrungen mit Verfahren zur Ammmoniumentfernung aus Abwässern und Abluft" bekannt (erschienen in STICKSTOFFRÜCKBELASTUNG - STAND DER TECHNIK 1998, ERWEITERTER TAGUNGSBAND ZUR 3. AACHENER TAGUNG MIT INFORMATIONSFORUM AM 10./11.03.1998 IM TECHNOLOGIE-ZENTRUM AM EUROPAPLATZ, AACHEN, Seiten 209-226).

Mit Hilfe der bekannten Verfahren ist es möglich, aus dem mit Ammonium oder Ammoniak beladenen Abwasser, insbesondere aus dem mit Ammonium oder Ammoniak beladenen Zentratwasser einer Kläranlage, einen Wertstoff, nämlich Ammoniumsulfat (AMS) oder Ammoniumphosphat (AMP), herzustellen. In den genannten Verfahren wird beispielsweise als Produkt eine 30- bis 40 %-ige AMS-Lösung mit einem pH-Wert von 2,0 bis 3,8, üblicherweise von 3,0, erhalten. Der pH-Wert dieser Lösung befindet sich im sauren Bereich. Das derart gebildete Produkt AMS bzw. AMP ist als Düngemittel bundesweit nicht zugelassen.

In der Praxis ist vorgeschlagen worden, den pH-Wert der vorgenannten wässrigen Lösung durch Zugabe einer wässrigen Ammoniak-Lösung, beispielsweise einer 25 %-igen NH₃-Lösung, auch Starkwasser genannt, auf über 5, beispielsweise 5,5, zu erhöhen, um ein handelsfähiges Produkt, nämlich ein Düngemittel, zu erhalten.

Nachteilig ist dabei, daß das für die pH-Korrektur verwendete Starkwasser zuzukaufen ist, wodurch die Wirtschaftlichkeit des Verfahrens belastet wird.

Das bekannte Verfahren arbeitet derart, daß das mit Ammonium bzw. Ammoniak beladene Abwasser einer NH₃-Strippkolonne zugeführt wird, in der eine Desorption des Ammoniaks aus der wässrigen Phase in die Gasphase durchgeführt wird. Am sumpfseitigen Ablauf tritt dann ein Abwasser mit um bis zu 99 % verringertem Ammonium- bzw. Ammoniak-Gehalt aus dieser Strippkolonne aus, während die am Kopf dieser Kolonne abgezogene, NH₃-beladene Luft unten, d.h. in den Sumpf einer zweiten Trennkolonne, nämlich einer sogenannten NH₃-Waschkolonne, eingeleitet wird. Am Kopf dieser Waschkolonne wird eine Säure, beispielsweise Schwefelsäure oder Phosphorsäure zudosiert, mit deren Hilfe eine chemische Reaktion und eine Gewinnung des Wertstoffes Ammoniumsulfat AMS oder Ammoniumphosphat AMP in dieser Kolonne erfolgt, wobei das hergestellte Produkt AMS oder AMP am sumpfseitigen Ablauf abgeführt und teilweise in den Kopf dieser Kolonne zurückgeführt wird und die den Kopf dieser Kolonne verlassende, gereinigte Luft über ein Gebläse in den unteren Teil der vorgenannten Strippkolonne eingeleitet wird. Die pH-Korrektur des gewonnenen Wertstoffes AMS oder AMP erfolgt durch Zugabe von Starkwasser beispielsweise in einem Mischer.

Der Erfindung liegt die Aufgabe zugrunde, ein Verfahren der genannten Art zu schaffen, das wirtschaftlicher und trotzdem umweltverträglich arbeitet. Der Erfindung liegt ferner die Aufgabe zugrunde, eine Vorrichtung zum Durchführen eines solchen Verfahrens anzugeben.

Diese Aufgabe wird verfahrensseitig durch ein Verfahren mit den Merkmalen des Patentanspruchs 1 und vorrichtungsseitig durch eine Vorrichtung mit den Merkmalen des Patentanspruchs 8 gelöst.

Vorteilhafte Weiterbildungen sind Gegenstand der jeweiligen Unteransprüche.

Erfindungsgemäß wird als NH₃-Quelle zum Anheben des pH-Wertes des Wertstoffes AMS oder AMP ein Teil des NH₃-beladenen Gasstroms von der ersten Trennkolonne verwendet. Diese Vorgehensweise hat den Vorteil, daß ein Zukauf von Starkwasserlösung, nämlich der NH₃-Lösung, entfallen kann und daß auch kein zusätzlicher, apparativer Aufwand, wie z. B. für einen Lagertank, betreffend das Starkwasser erforderlich ist. Insofern hat die erfindungsgemäße Vorgehensweise einen erheblichen Einfluß auf die Wirtschaftlichkeit des Verfahrens und dient damit zu einer beträchlichen Reduzierung der entstehenden Investitionsund Betriebskosten. Erfindungsgemäß ist es daher möglich, Ammoniumsulfat oder Ammoniumphosphat mit gasförmigem Ammoniak (NH₃) ohne die Nutzung von Starkwasser in Düngemittelqualität herzustellen bzw. zu gewinnen.

Gemäß einer Weiterbildung des Verfahrens wird in der ersten Trennkolonne eine Strippung mit Luft durchgeführt und der dabei gebildete NH₃-beladene Gasstrom als Luftstrom teilweise in die als NH₃-Waschkolonne ausgebildete, zweite Trennkolonne und teilweise in eine ebenfalls als NH₃-Waschkolonne ausgebildete, dritte Trennkolonne eingeleitet, wobei das am Sumpf der zweiten Trennkolonne abgezogene AMS oder AMP am Kopf der dritten Trennkolonne zugegeben und in dieser Kolonne einer pH-Korrektur unterzogen wird. Vorteilhaft ist dabei, daß die leicht saure AMS-Lösung mit einem pH-Wert von etwa 2,0 bis 3,8 in der dritten Trennkolonne mit gasförmigem Ammoniak NH₃ im Bypass behandelt wird. Insofern dient der in die dritte Trennkolonne eingeleitete Teilstrom an NH₃-beladener Luft dazu, den pH-Wert des Wertstoffes AMS oder AMP anzuheben und so ein als Düngemittel einsatzfähiges Produkt zu schaffen. In der dritten Trennkolonne erfolgt also die Anreicherung der AMS- oder AMP-Lösung auf die gewünschte Konzentration und einen pH-Wert von etwa 5,5.

Gemäß einer vorteilhaften Weiterbildung wird der am Kopf der dritten Trennkolonne abgezogene NH₃-beladene Luftstrom in die zweite Trennkolonne zurückgeleitet und wird der am Kopf der zweiten Trennkolonne abgezogene Luftstrom in die erste Trennkolonne zurückgeleitet. Damit kann die in der dritten Trennkolonne vorbehandelte, NH₃-beladene Luft einer Nachbehandlung in der Waschkolonne, nämlich der zweiten Trennkolonne, bei niedrigeren pH-Werten unterzogen werden. Diese Maßnahme läßt sich vorzugsweise allein durch die Installation eines Gebläses oder Ventilators erzielen, welcher in einer Leitung installiert ist, die den Kopf der zweiten Trennkolonne mit dem unteren Teil der ersten Trennkolonne zwecks Rückleitung des am Kopf der zweiten Trennkolonne abgezogenen Luftstroms in die erste Trennkolonne verbindet.

Gemäß einer anderen Weiterbildung der Erfindung wird in der ersten Trennkolonne eine Strippung mit Dampf durchgeführt und der dabei gebildete NH₃-beladene Gasstrom als Dampfstrom teilweise in die als NH₃-Waschkolonne ausgebildete, zweite Trennkolonne und teilweise in eine ebenfalls als NH₃-Waschkolonne ausgebildete, dritte Trennkolonne eingeleitet, wobei das am Sumpf der zweiten Trennkolonne abgezogene AMS oder AMP am Kopf der dritten Trennkolonne zugegeben und in dieser Kolonne einer pH-Korrektur unterzogen wird. Diese Weiterbildung unterscheidet sich von der erstgenannten Weiterbildung im wesentlichen lediglich dadurch, daß anstelle einer Luftstrippung nunmehr eine Dampfstrippung durchgeführt wird.

Der in der zweiten Trennkolonne aufsteigende Dampf kondensiert in dieser Kolonne vollständig, so daß bei dieser Weiterbildung keine Rückleitung eines am Kopf dieser Kolonne abgezogenen Luftstroms an die erste Trennkolonne erfolgt; vielmehr wird lediglich der am Kopf der dritten Trennkolonne abgezogene NH₃-beladene Dampfstrom in die zweite Trennkolonne, vorzugsweise in den unteren Teil derselben, zurückgeleitet. Diese zweite Weiterbildung bietet insbesondere dann Vorteile, wenn vor Ort eine genügene Heizdampfmenge zur Verfügung steht oder kostengünstig erzeugt werden kann. Das bei dem Durchführen des erfindungsgemäßen Verfahrens hergestellte Produkt bzw. der dabei entstehende Wertstoff kann in die Produktion zurückgeführt oder als wertvolles und marktfähiges Produkt in der Landwirtschaft oder Industrie wieder eingesetzt werden. Wie erwähnt, orientiert sich die Wahl des jeweils zweckmäßigen Verfahrens an den verfügbaren Energiequellen und an der Verwendungsmöglichkeit für den gewonnenen Wertstoff.

Gemäß einer besonders bevorzugten Ausführungsform wird der in der ersten Trennkolonne gebildete, NH₃-beladene Gasstrom teilweise in eine als NH₃-Waschkolonne ausgebildete, weitere Trennkolonne zwecks Herstellung und Gewinnung von Starkwasser (NH₄OH) eingeleitet, das dem am Sumpf der zweiten Trennkolonne abgezogenen AMS oder AMP zur pH-Korrektur zugegeben wird, wobei vorzugsweise in der ersten Trennkolonne eine Rektifikation durchgeführt wird und der dabei gebildete NH₃-beladene Gasstrom als Dampfstrom vorliegt. Vorteilhaft ist dabei, daß letztlich zwei Produkte oder Wertstoffe, nämlich sowohl Starkwasser in Form einer 25 %-igen NH₃-Lösung als auch Ammoniumsulfat (40 %-ige AMS-Lösung) oder Ammoniumphosphat in Düngemittelqualität, gewonnen werden können. Es ist somit möglich, in derselben Anlage beide Produkte, nämlich Starkwasser und Ammoniumsulfat oder Starkwasser und Ammoniumphosphat, zu gewinnen. Dadurch kann Starkwasser sozusagen für den eigenen Bedarf und darüber hinaus auch als auf dem Markt absetzbares Produkt hergestellt werden. Beide Produkte bzw.

Wertstoffe können somit ohne Einfluß des Marktes gewonnen und als Wertstoffe in die Kreislaufwirtschaft zurückgeführt werden.

Vorrichtungsseitig hat die Erfindung eine erste Trennkolonne zum Überführen des Ammoniums aus der wässrigen Phase in eine mit Ammoniak NH₃-beladene, einen Gasstrom bildende Gasphase, eine zweite Trennkolonne, deren Sumpf mit dem Kopf der ersten Trennkolonne zwecks teilweisen Einleitens des NH₃-beladenen Gasstroms verbunden ist und deren Kopf an eine Leitung zum Zugeben von Schwefelsäure oder Phosphorsäure zwecks Gewinnung des Wertstoffes Ammoniumsulfat AMS oder Ammoniumphosphat AMP angeschlossen ist, und eine dritte Trennkolonne zum Verarbeiten des restlichen Teils des NH₃-beladenen Gasstromes zum Anheben des pH-Wertes des Wertstoffes AMS oder AMP. Insofern erfolgt die Anreicherung der starksauren AMS- oder AMP-Lösung mit einem pH-Wert von 2,0 bis 3,8 durch Ausnutzung des gasförmigen Amoniaks, welches in der NH₃-beladenen Abluft nach der ersten Trennkolonne auftritt. Dadurch kann diese Vorrichtung wirtschaftlicher als eine Vorrichtung nach dem Stand der Technik arbeiten. Bei der erfindungsgemäßen Vorrichtung ist nämlich kein Zukauf und keine separate Lagerung des Starkwassers erforderlich, wodurch die dafür zu berücksichtigenden Investitionskosten vermieden werden können. Dadurch kann die erfindungsgemäße Vorrichtung auch unabhängiger als eine Vorrichtung nach den bekannten Verfahren arbeiten.

Gemäß einer ersten Weiterbildung ist die erste Trennkolonne eine Luftstrippkolonne, auch Stripper genannt, und die zweite sowie die dritte Trennkolonne jeweils eine NH₃-Waschkolonne, wobei der Kopf der ersten Trennkolonne ferner mit dem Sumpf der dritten Trennkolonne und der Sumpf der zweiten Trennkolonne mit dem Kopf der dritten Trennkolonne zwecks Aufgabe des zu behandelnden Produktes AMS oder AMP in der dritten Kolonne im Gegenstrom zu dem aufsteigenden NH₃-beladenen Luftstrom verbunden ist. Vorzugsweise ist ferner der Kopf der dritten Trennkolonne zwecks Zurückleitung des dort abgezogenen NH₃-beladenen Luftstromes mit dem Sumpf der zweiten Trennkolonne verbunden und der Kopf der zweiten Trennkolonne zwecks Zurückleitung des dort abgezogenen Luftstroms über ein Gebläse mit dem Sumpf der ersten Trennkolonne verbunden. Vorteilhafterweise geschieht die jeweilige Zurückleitung bzw. Rückführung der beladenen Luft von der dritten zur zweiten Trennkolonne und der gereinigten Luft von der zweiten in die erste Trennkolonne lediglich mit Hilfe des einen genannten Gebläses.

Gemäß einer zweiten Weiterbildung ist die erste Trennkolonne eine Dampfstrippkolonne und die zweite sowie die dritte Trennkolonne jeweils eine NH₃-Waschkolonne, wobei der Kopf der ersten Trennkolonne ferner mit dem Sumpf der dritten Trennkolonne und der Sumpf der zweiten Trennkolonne mit dem Kopf der dritten Trennkolonne verbunden und vorzugsweise der Kopf der dritten Trennkolonne zwecks Zurückleitung des dort abgezogenen NH₃beladenen Dampfstromes mit dem Sumpf der zweiten Trennkolonne verbunden ist. Analog zu dem entsprechenden Verfahren unterscheidet sich die Vorrichtung gemäß der letztgenannten Weiterbildung im Vergleich zur erstgenannten, vorrichtungsseitigen Weiterbildung dadurch, daß anstelle eines Luftstrippers ein sogenannter Dampfstripper zum Einsatz kommt. Es ist klar, daß anstelle des bei der ersten Weiterbildung erwähnten Gebläses im Falle der letztgenannten Weiterbildung beispielsweise ein Umlaufverdampfer vorgesehen ist.

Gemäß einer besonders bevorzugten, dritten Ausführungsform der Erfindung ist die dritte Trennkolonne eine weitere NH₃-Waschkolonne zum Herstellen und Gewinnen von Starkwasser NH₄OH, deren Sumpf mit demjenigen der dritten Trennkolonne verbunden ist, wobei vorzugsweise die erste Trennkolonne eine Rektifizierkolonne mit Verstärkungsteil und Abtriebsteil ist, zwischen denen der Zulauf des Abwassers angeordnet ist. Statt also Starkwasser, wie im Falle des Standes der Technik beschrieben, zuzukaufen, wird das für die chemische Reaktion erforderliche Ammoniak NH₃ aus dem NH₃-beladenen Dampfstrom der Rektifizierkolonne herangezogen und zur Bildung von mittels der Vorrichtung hergestelltem Starkwasser verwendet. Mit dieser Weiterbildung können daher sowohl Starkwasser als auch Ammoniumsulfat bzw. Ammoniumphosphat in Düngemittelqualität gewonnen werden.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: ein Anlagenschema einer Vorrichtung zum Durchführen eines Verfahrens zur Entfernung von Ammonium aus Abwässern, insbesondere aus dem Zentratwasser einer Kläranlage, und zur Wertstoffgewinnung gemäß einer ersten Ausführungsform;
- Fig. 2: ein Verfahrensschema der Vorrichtung zum Durchführen des Verfahrens gemäß einer zweiten Ausführungsform; und
- Fig. 3: ein Verfahrensschema der Vorrichtung zum Durchführen des Verfahrens gemäß einer dritten Ausführungsform.

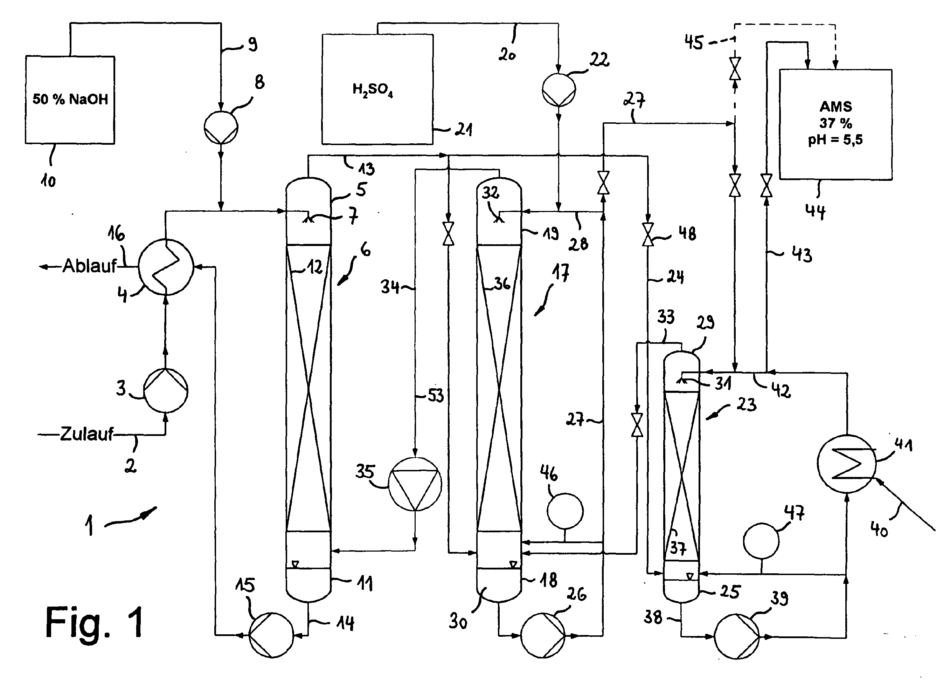

In Fig. 1 is ein Verfahrensschema einer Vorrichtung 1 zur Entfernung von Ammonium (NH₄) bzw. Ammoniak (NH₃) aus Abwässern, insbesondere aus dem Zentratwasser einer Kläranlage, und zur Wertstoffgewinnung dargestellt. Der Zulauf 2 bildet das NH₃-beladene Abwasser. Da das "Ammoniumhydroxid" sich aus Wasser und Ammoniak bildet, beim Erwärmen aber wieder in Ammoniak und Wasser zerfällt, gilt die umkehrbare Reaktion:

NH₃ + H₂O NH₄OH (Gleichung 1)

Bei dem hier dargestellten Verfahren handelt es sich beispielsweise um die Entfernung von Ammonium aus den Faulwässern nach der Schlammentwässerung mit Kammerfilterpressen oder Dekantern bzw. Zentrifugen mit Hilfe von Dampfstripp- oder Luftstrippverfahren.

Der Zulauf 2 wird mittels einer Pumpe 3 über einen Wärmetauscher 4 zum Vorwärmen des Zulaufs zum Kopf 5 einer ersten Trennkolonne 6 geführt. Bevor der vorerwärmte Zulauf 2 über einen Flüssigkeitsverteiler 7 in die Kolonne 6 eintritt, wird 50 %-ige Natronlauge NaOH dem Zulauf 2 mittels einer Dosierpumpe 8 über eine Leitung 9 aus einem Behälter 10 zudosiert.

Die erste Trennkolonne 6 ist als Luftstrippkolonne, auch Luftstripper genannt, ausgebildet, wobei die am Sumpf 11 der Trennkolonne 6 eintretende Luft im Gegenstrom zu der über den Flüssigkeitsverteiler 7 aufgegebenen Flüssigkeit geführt wird. Die Trennkolonne 6 ist beispielsweise eine Füllkörperkolonne mit einer Füllkörperschüttung 12. Die Füllkörperschüttung 12 dient dazu, eine große Stoffaustauschfläche zwischen der herabströmenden Flüssigkeit und der aufströmenden Luft bereitzustellen, so daß die Trennkolonne 6 dazu dient, das Ammonium NH₄ aus der wässrigen Phase, d. h. aus dem Abwasser, in eine mit Ammoniak (NH₃) beladene, einen Gasstrom 13 bildende Gasphase zu überführen. Mithin wird der NH₃-beladene Gasstrom 13 am Kopf der Kolonne 5 abgezogen, während das behandelte Abwasser 14, dessen Ammoniumkonzentration gegenüber derjenigen des Zulaufs 2 beträchtlich verringert ist, über eine Pumpe 15 und den Wärmetauscher 4 zum Vorwärmen des Zulaufs 2 abgezogen wird und letztlich den Ablauf 16 bildet.

Die Vorrichtung 1 hat ferner eine zweite Trennkolonne 17, deren Sumpf 18 mit dem Kopf 5 der ersten Trennkolonne 6 zwecks teilweisen Einleitens des NH₃-beladenen Gasstroms 13 verbunden ist und deren Kopf 19 an eine Leitung 20 zum Zugeben von Schwefelsäure H₂SO₄ aus einem Behälter 21 über eine Dosierpumpe 22 angeschlossen ist. Dadurch wird anhand der chemischen Reaktion:

2 NH₃ + H₂SO₄ (NH₄)₂ SO₄ (Gleichung 2)

der Wertstoff Ammoniumsulfat (NH₄)₂ SO₄, AMS abgekürzt, gewonnen. Es ist auch möglich, anstelle der genannten Schwefelsäure Phosphorsäure in die zweite Trennkolonne 17 einzuleiten, wodurch dann der Wertstoff Ammoniumphosphat, AMP abgekürzt, am Sumpf 18 der zweiten Trennkolonne 17 erhalten wird.

Außerdem hat die Vorrichtung 1 eine dritte Trennkolonne 23 zum Verarbeiten des restlichen Teils 24 des NH₃-beladenen Gasstroms 13 zum Anheben des pH-Wertes des in der zweiten Trennkolonne gebildeten Wertstoffes AMS oder AMP.

Gemäß dem in Fig. 1 gezeigten Anlagenschema der ersten Ausführungsform ist, wie erwähnt, die erste Trennkolonne 6 eine Luftstrippkolonne. Die zweite sowie die dritte Trennkolonne 17, 23 sind jeweils eine NH₃-Waschkolonne. Dabei ist der Kopf 5 der ersten Trennkolonne 6, wie erwähnt, mit dem Sumpf 25 der dritten Trennkolonne 23 zwecks Einleitung des restlichen Teils des NH₃-beladenen Gasstroms 13 verbunden, welcher bei dieser Ausführungsform als NH₃-beladener Luftstrom ausgebildet ist.

Wie ferner in Fig. 1 gezeigt, ist der Sumpf 18 der zweiten Trennkolonne 17 über eine Pumpe 26 und eine Leitung 27, welche mittels einer Verbindungsleitung 28 eine (teilweise) Rückführung des Sumpfproduktes zum Kopf 19 der Kolonne ermöglicht, an den Kopf 29 der dritten Trennkolonne 23 angeschlossen. Das Sumpfprodukt 30 entspricht dem gewonnenen AMS oder AMP mit einem pH-Wert von beispielsweise 3,0. Dieses Produkt, auch Wertstoff genannt, wird, wie erwähnt, über die Leitung 27 in den Kopf 29 der dritten Trennkolonne 23 mittels eines Flüssigkeitsverteilers 31 eingespeist. Auch der über die Verbindungsleitung 28 rückgeführte Teil des Sumpfproduktes 30 wird zusammen mit der zudosierten Schwefelsäure über einen Flüssigkeitsverteiler 32 in die zweite Trennkolonne 17 eingespeist.

Ferner ist der Kopf 29 der dritten Trennkolonne 23 zwecks Zurückleitung des dort abgezogenen NH₃-beladenen Luftstroms 33 mit dem Sumpf 18 der zweiten Trennkolonne 17 verbunden. Ferner ist der Kopf 19 der zweiten Trennkolonne 17 zwecks Rückleitung des dort abgezogenen Luftstroms 34 über ein Gebläse 35 mit dem Sumpf 11 der ersten Trennkolonne 6 verbunden. Wie erwähnt ist für die Zurückleitung sowohl des NH₃-beladenen Luftstroms 33 als auch des Luftstroms 34 lediglich das eine Gebläse 35 vorgesehen.

Auch die Trennkolonnen 17, 23 sind im Falle der Ausführungsform der Fig. 1 beispielsweise als Füllkörperkolonnen mit einer Füllkörperschüttung 36, 37 ausgebildet.

Beide Trennkolonnen 17, 23 arbeiten ebenso wie die erste Trennkolonne 6 als Gegenstromkolonnen, wobei jeweils der Luftstrom am Sumpf der jeweiligen Kolonne und die Flüssigkeit am Kopf der jeweiligen Kolonne aufgegeben wird. Am Sumpf 25 der dritten Trennkolonne 23 wird der gewünschte Wertstoff AMS mit einer Konzentration von etwa 37 % und einem pH-Wert von etwa 5,5 über eine Leitung 38, eine Pumpe 39 und einen mit Kühlwasser 40 gespeisten Wärmetauscher 41 zum Kopf 29 der dritten Trennkolonne geführt, wo vorzugsweise ein Teil des Wertstoffs über eine Verbindungsleitung 42 in den Kopf 29 der dritten Trennkolonne 23 zurückgeführt und ein anderer Teil über eine Leitung 43 in einen Wertstoff-Behälter 44 eingeleitet wird.

Die gestrichelt eingezeichnete Notfall-Leitung 45, welche die Leitung 27 mit dem Behälter 44 verbindet, kann auch entfallen. Ferner sind die Trennkolonnen 17, 23 mit in Verbindungsleitungen sitzenden pH-Messern 46, 47 versehen, welche Leitungen die Ablaufleitung 27, 38 der Flüssigkeit jeweils mit dem Sumpf 18, 25 verbinden.

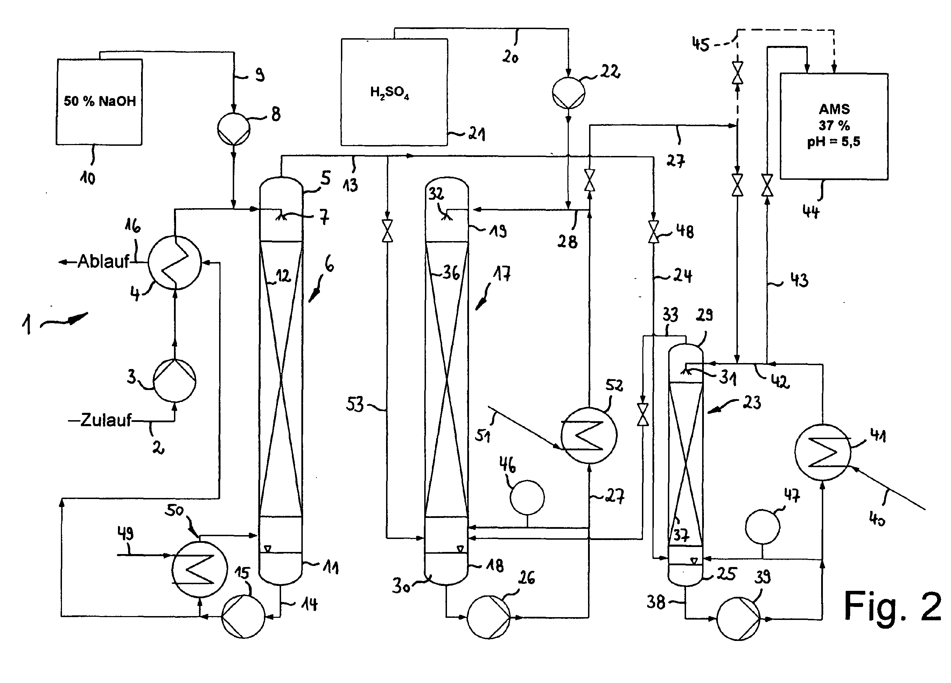

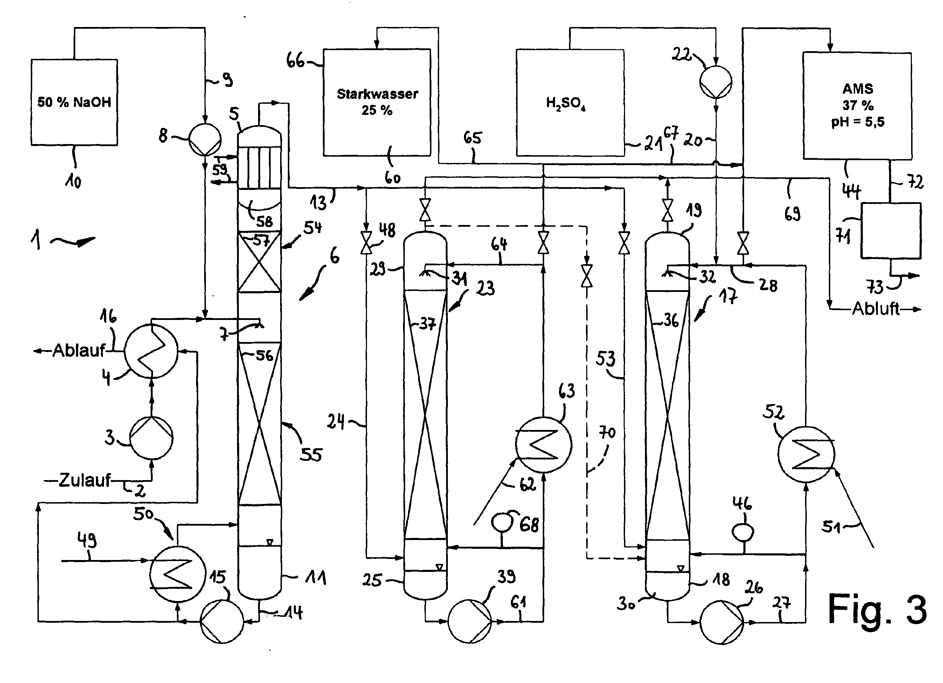

Es ist klar, daß die in Fig. 1 dargestellte Vorrichtung ferner mit den üblichen Steuer- und Regeleinrichtungen, wie beispielsweise mit zahlreichen Ventilen 48, ausgestattet ist. Diese sind in Fig. 1 im übrigen auch in den Fig. 2 und 3 lediglich beispielhaft eingezeichnet.

Wie erwähnt, zeigt der pH-Messer 46 der zweiten Trennkolonne 17 üblicherweise einen pH-Wert von etwa 3,0 und der pH-Messer 47 der dritten Trennkolonne 23 etwa einen pH-Wert von 5,5 an. Je nach Auslegung der in Fig. 1 gezeigten Anlage kann auch in der Leitung 27 ein Wärmetauscher vorgesehen sein. Es ist auch möglich, den restlichen Teil 24 des Gasstroms 13 über ein nicht näher gezeigtes Gebläse in den Sumpf 25 der dritten Trennkolonne 23 einzuleiten.

In Fig. 2 ist ein Anlagenschema der erfindungsgemäßen Vorrichtung 1 gemäß einer zweiten Ausführungsform gezeigt. Wesentliche Komponenten dieser zweiten Ausführungsform entsprechen denjenigen der in Fig. 1 gezeigten ersten Ausführungsform und erhalten daher dieselben Bezugszeichen.

Gemäß der zweiten Ausführungsform ist die erste Trennkolonne 6 eine sogenannte Dampfstrippkolonne. Die zweite sowie die dritte Trennkolonne 17, 23 sind jeweils wie im Falle der ersten Ausführungsform eine NH₃-Waschkolonne. Dazu hat die erste Trennkolonne 6 einen mit Heizdampf 49 betriebenen Umlaufverdampfer 50, welcher die Leitung 14 nach der Pumpe 15 mit dem Sumpf 11 der Kolonne 6 verbindet.

In die Leitung 27, welche den Sumpf 18 der zweiten Trennkolonne 17 mit dem Kopf 29 der dritten Trennkolonne 23 verbindet, ist ein mit Kühlwasser 51 betriebener Wärmetauscher 52 eingebaut, mit dessen Hilfe die Temperatur des am Kopf 29 der dritten Trennkolonne 23 vorliegenden Wertstoffs AMS eingestellt werden kann. Die zweite Trennkolonne 17 wird in diesem Fall derart betrieben, daß der vom Gasstrom 13 abgezweigte und dem Sumpf 18 der zweiten Trennkolonne 17 zugeführte Gasstrom, welcher hier als Dampfstrom ausgebildet ist, in der Trennkolonne 17 vollständig kondensiert, so daß der Kopf der Trennkolonne 17 anders als bei der in Fig. 1 gezeigten Ausführungsform nicht mit dem Sumpf 11 der ersten Trennkolonne 6 verbunden ist. Es ist klar, daß insofern bei dieser Ausführungsform auch das in Fig. 1 vorgesehene Gebläse 35 entfällt. Insofern ist lediglich der Kopf 29 der dritten Trennkolonne 23 zwecks Zurückleitung des dort abgezogenen NH₃-beladenen Gasstroms 33, welcher hier als Dampfstrom vorliegt, mit dem Sumpf 18 der zweiten Trennkolonne 17 verbunden.

Eine Vorrichtung 1 gemäß einer dritten Ausführungsform ist in dem Anlagenschema gemäß Fig. 3 dargestellt.

Hierbei ist die erste Trennkolonne 6 eine Rektifizierkolonne mit Verstärkungsteil 54 und Abtriebsteil 55, zwischen denen der Zulauf 2 des Abwassers zur Rektifizierkolonne angeordnet ist. Der Zulauf mündet in den Flüssigkeitsverteiler 7, welcher die Schüttung 56 des Abtriebsteils 55 mit dem zu behandelnden Abwasser versorgt. Der untere Teil dieser ersten Trennkolonne entspricht mit dem Umlaufverdampfer 50, der Pumpe 15, der Leitung 14 und dem Wärmeaustauscher 4 etwa dem betreffenden Teil der Trennkolonne 6 gemäß der in Fig. 2 dargestellten, zweiten Ausführungsform der Vorrichtung. Auch die die Zugabe der 50 %igen Natronlauge betreffenden Komponenten entsprechen denjenigen der in Fig. 2 gezeigten, zweiten Ausführungsform. Auch im Falle der Fig. 3 wird daher die genannte Natronlauge über die Dosierpumpe 8 und die Leitung 9 dem vorgewärmten Flüssigkeitszulauf 2 zur Kolonne zudosiert.

Oberhalb des Abtriebsteils 55 der als Rektifizierkolonne ausgebildeten ersten Trennkolonne 6 befindet sich, wie in Fig. 3 gezeigt, der Verstärkungsteil 54 mit seiner Schüttung 57. Am Kopf 5 der Trennkolonne 6 und damit oberhalb des Verstärkungsteils 54 befindet sich ein beispielsweise als Rohrbündelwärmetauscher ausgebildeter Kondensator 58, welcher mit Kühlwasser 59 versorgt wird und einen Teil des aufsteigenden Gasstroms, welcher hier als Dampfstrom ausgebildet ist, niederschlägt. Der kondensierte Teil beaufschlagt die Schüttung 57 des Verstärkungsteils 54 mit Flüssigkeit. Der aus dem Kondensator 58 austretende, NH₃beladene Gasstrom 13 wird teilweise, d. h. als abgezweigter Gasstrom, in diesem Fall als abgezweigter Dampfstrom, dem Sumpf 18 der zweiten Trennkolonne 17 zugeleitet, welche, anders als bei der in Fig. 2 gezeigten zweiten Ausführungsform, in Fig. 3 rechts dargestellt ist. Die Komponenten dieser zweiten Trennkolonne 17 entsprechen einschließlich der Zudosierung der Schwefelsäure aus dem Behälter 21 etwa derjenigen der zweiten Trennkolonne 17 gemäß Fig. 2.

Die dritte Trennkolonne 23 ist in Fig. 3 zwischen die links gezeichnete, erste Trennkolonne 6 und die rechts gezeichnete, zweite Trennkolonne 17 gezeichnet. Diese dritte Trennkolonne 23 ist ebenso wie die zweite Trennkolonne 17 dieser Ausführungsform eine NH₃-Waschkolonne. Diese wird gemäß der besonders bevorzugten Ausführungsform der Fig. 3 zum Herstellen und Gewinnen von Starkwasser (NH₄OH) 60 eingesetzt. Dazu ist der Sumpf 25 dieser dritten Trennkolonne mit dem restlichen Teil 24 des als Dampfstrom ausgebildeten, NH₃-beladenen Gasstroms 13 beaufschlagt. In der Schüttung 37 dieser Trennkolonne kondensiert der vom Sumpf 25 der Kolonne her aufsteigende, NH₃-beladene Dampfstrom vollständig. Am Sumpf 25 wird daher über eine mit einer Pumpe 39 versehene Leitung 61 das in dieser Kolonne hergestellte 25 %-ige Starkwasser über einen mit Kühlwasser 62 versorgten Wärmetauscher 63 zum Kopf 29 der dritten Trennkolonne 23 geführt und über eine Verbindungsleitung 64 und den Flüssigkeitsverteiler 31 im Gegenstrom zu dem aufsteigenden Dampf gegebenenfalls teilweise in die Kolonne eingespeist. Der nicht in die Kolonne rückgeführte Teil des gewonnenen Starkwassers wird über eine Leitung 65 in einen Starkwasser-Behälter 66 und/oder in Abhängigkeit von den einzustellenden Bedingungen über eine Verbindungsleitung 67 in die Leitung 27 der zweiten Trennkolonne 17, welche den Wertstoff AMS oder AMP führt, eingeleitet. Dieses über die Leitung 67 eingeleitete Starkwasser kann zur pH-Korrektur des in der zweiten Trennkolonne 17 gewonnenen AMS oder AMP verwendet werden, so daß wieder ein Wertstoff AMS oder AMP mit einem pH-Wert von etwa 5,5 in den Behälter 44 zum Sammeln des Wertstoffs eingeleitet werden kann. Auch die Leitung 61 ist über einen pH-Messer 68 mit dem Sumpf 25 der dritten Trennkolonne 23 verbunden.

Insofern wird das zur pH-Korrektur des in der zweiten Trennkolonne erzeugten Wertstoffs AMS oder AMP benötigte Starkwasser in der in Fig. 3 gezeigten Vorrichtung, nämlich in der dritten Trennkolonne 23, selbst hergestellt. Überschüssiges Starkwasser wird, wie erwähnt, im Behälter 66 gesammelt und kann auf dem Markt ebenso wie der gewonnene Wertstoff AMS oder AMP veräußert werden.

Die Köpfe 19, 29 der zweiten und dritten Trennkolonne 17, 23 sind über eine Leitung 69, welche die Abluft enthält, mit der umgebenden Atmosphäre verbunden. Die Abluft besteht vorzugsweise aus Inertgasen. Eine solche Leitung 69 kann auch bei der in Fig. 2 dargestellten zweiten Ausrührungsform vorhanden sein.

Der Gasstrom 13, welcher am Kopf der ersten Trennkolonne 6 abgezogen wird, ist vorzugsweise NH₃-beladener Wasserdampf.

Eine weitere Ausführungsform ist in Fig. 3 gezeigt, bei der der Kopf 29 der dritten Trennkolonne über eine gestrichelt dargestellte Leitung 70 mit dem Sumpf 30 der zweiten Trennkolonne 17 verbunden ist. Das über diese Leitung aus der dritten Trennkolonne abgezogene restliche NH₃ kann der zweiten Trennkolonne 17 zur pH-Anhebung des Wertstoffs AMS oder AMP verwendet werden.

Es ist klar, daß auch die Vorrichtung gemäß Fig. 3 mit den üblichen Steuer- und Regeleinrichtungen versehen ist und insbesondere zahlreiche Ventile 48 aufweist.

Mit der in Fig. 3 gezeigten Auführungsform ist also ein gleichzeitiges Herstellen von Starkwasser und Ammoniumsulfat bzw. Ammoniumphosphat in Düngemittelqualität möglich. Dadurch kann diese Vorrichtung besonders wirtschaftlich arbeiten.

Wie in bezug auf die Ausführungsbeispiele gemäß den Fig. 1, 2 und 3 erwähnt, befindet sich der gewünschte Wertstoff AMS oder AMP mit einer Konzentration von etwa 37 % und einem pH-Wert von etwa 5,5 in dem Wertstoff-Behälter 44. Wie in Fig. 3 angedeutet, ist dieser Behälter 44 zwecks Aufkonzentration des Wertstoffs AMS oder AMP auf 100 % mit einem weiteren verfahrenstechnischen Apparat 71 über eine Leitung 72 verbunden. Dieser verfahrenstechnische Apparat 71 ist beispielsweise ein Kristallisator, Sprühtrockner oder Verdampfer, aus dem der Wertstoff AMS oder AMP mit einer Konzentration von 100 % über die Leitung 73 austritt. Es ist klar, dass der vorgenannte Verfahrensschritt der Aufkonzentration auch mehrstufig und gegebenenfalls auch durch miteinander kombinierte Verfahren durchgeführt werden kann. Die vorgenannten Verfahrensschritte der Kristallisation, Sprühtrocknung und Verdampfung sind lediglich beispielhaft angegeben. Damit ist es möglich, den Wertstoff AMS oder AMP mit einer Konzentration von 100 % und damit als Feststoff zu gewinnen.

Das erfindungsgemäße Verfahren zur Entfernung von Ammonium (NH₄) aus Abwässern, insbesondere aus dem Zentratwasser einer Kläranlage, und zur Wertstoffgewinnung, arbeitet mit folgenden Schritten:
a) Überführen des Ammoniums aus der wässrigen Phase in eine mit Ammoniak (NH₃)-beladene, einen Gasstrom bildende Gasphase mittels einer ersten Trennkolonne 6;
b) Einleiten des NH₃-beladenen Gasstroms 13 und Zugeben von Schwefelsäure oder Phosphorsäure in eine zweite Trennkolonne 17 zwecks Gewinnung des Wertstoffes Ammoniumsulfat (AMS) oder Ammoniumphosphat (AMP) in dieser Kolonne mit einem pH-Wert von etwa 2,0 bis 3,8;
c) Anheben des pH-Wertes des Wertstoffes AMS oder AMP auf wenigstens etwa 5,5 durch Zugabe von NH₃ zu dem jeweiligen Wertstoff,
wobei als NH₃-Quelle im Schritt c) ein Teil des NH₃-beladenen Gasstroms von der ersten Trennkolonne verwendet wird.

Gemäß einer ersten Ausführungsform des erfindungsgemäßen Verfahrens wird in der ersten Trennkolonne 6 eine Strippung mit Luft durchgeführt. Der dabei gebildete NH₃-beladene Gasstrom wird als Luftstrom teilweise in die als NH₃-Waschkolonne ausgebildete, zweite Trennkolonne 17 und teilweise in eine ebenfalls als NH₃-Waschkolonne ausgebildete, dritte Trennkolonne 23 eingeleitet. Das am Sumpf der zweiten Trennkolonne abgezogene AMS oder AMP wird am Kopf der dritten Trennkolonne zugegeben und in dieser Kolonne der pH-Korrektur unterzogen.

Gemäß dieser ersten verfahrensseitigen Ausführungsform wird der am Kopf der dritten Trennkolonne abgezogene NH₃-beladene Luftstrom in die zweite Trennkolonne zurückgeleitet. Ebenso wird der am Kopf der zweiten Trennkolonne abgezogene Luftstrom in die erste Trennkolonne zurückgeleitet.

Gemäß einer zweiten, verfahrensseitigen Ausführungsform der Erfindung wird in der ersten Trennkolonne eine Strippung mit Dampf durchgeführt. Der dabei gebildete NH₃-beladene Gasstrom wird als Dampfstrom teilweise in die als NH₃-Waschkolonne ausgebildete, zweite Trennkolonne und teilweise in eine ebenfalls als NH₃-Waschkolonne ausgebildete, dritte Trennkolonne 23 eingeleitet. Das am Sumpf der zweiten Trennkolonne abgezogene AMS oder AMP wird am Kopf der dritten Trennkolonne zugegeben und in dieser Kolonne der pH-Korrektur unterzogen.

Bei dieser Ausführungsform wird der am Kopf der dritten Trennkolonne abgezogene NH₃beladene Dampfstrom in die zweite Trennkolonne zurückgeleitet.

Gemäß einer dritten, verfahrensseitigen Ausführungsform wird der in der ersten Trennkolonne gebildete NH₃-beladene Gasstrom teilweise in eine als NH₃-Waschkolonne ausgebildete, weitere Trennkolonne 23 zwecks Herstellung und Gewinnung von Starkwasser (NH₄OH) eingeleitet. Das Starkwasser wird dem am Sumpf der zweiten Trennkolonne 17 abgezogenen AMS oder AMP zur pH-Korrektur zugegeben.

Damit ist ein Verfahren geschaffen, mit dem ein Entfernen von Ammonium aus Abwässern und eine Gewinnung von Wertstoffen in ein und derselben Anlage bzw. Vorrichtung sehr wirtschaftlich durchführbar ist. Ferner ist eine Vorrichtung angegeben, mit deren Hilfe das erfindungsgemäße Verfahren durchführbar ist.

## Patentansprüche

1. Verfahren zur Entfernung von Ammonium (NH₄) aus Abwässern, insbesondere aus dem Zentratwasser einer Kläranlage, und zur Wertstoffgewinnung, mit folgenden Schritten:
a) Überführen des Ammoniums aus der wässrigen Phase in eine mit Ammoniak (NH₃) beladene, einen Gasstrom bildende Gasphase mittels einer ersten Trennkolonne (6);
b) Einleiten des NH₃-beladenen Gasstroms und Zugeben von Schwefelsäure oder Phosphorsäure in eine zweite Trennkolonne (17) zwecks Gewinnung des Wertstoffes Ammoniumsulfat (AMS) oder Ammoniumphosphat (AMP) in dieser Kolonne mit einem pH-Wert von 2,0 bis 3,8;
c) Anheben des pH-Wertes des Wertstoffes AMS oder AMP auf wenigstens 5,5 durch Zugabe von NH₃ zu dem jeweiligen Wertstoff,
**dadurch gekennzeichnet, daß**
als NH₃-Quelle im Schritt c) ein Teil des NH₃-beladenen Gasstroms von der ersten Trennkolonne (6) verwendet wird.

2. Verfahren nach Anspruch 1, **dadurch gekennzeichnet, daß** in der ersten Trennkolonne (6) eine Strippung mit Luft durchgeführt wird und der dabei gebildete NH₃-beladene Gasstrom (13) als Luftstrom teilweise in die als NH₃-Waschkolonne ausgebildete, zweite Trennkolonne (17) und teilweise in eine ebenfalls als NH₃-Waschkolonne ausgebildete, dritte Trennkolonne (23) eingeleitet wird, wobei das am Sumpf der zweiten Trennkolonne (17) abgezogene AMS oder AMP am Kopf der dritten Trennkolonne (23) zugegeben und in dieser Kolonne einer pH-Korrektur unterzogen wird.

3. Verfahren nach Anspruch 2, **dadurch gekennzeichnet, daß** der am Kopf der dritten Trennkolonne (23) abgezogene NH₃-beladene Luftstrom in die zweite Trennkolonne (17) zurückgeleitet wird und der am Kopf der zweiten Trennkolonne (17) abgezogene, gereinigte Luftstrom in die erste Trennkolonne (6) zurückgeleitet wird.

4. Verfahren nach Anspruch 1, **dadurch gekennzeichnet, daß** in der ersten Trennkolonne (6) eine Strippung mit Dampf durchgeführt wird und der dabei gebildete NH₃-beladene Gasstrom als Dampfstrom teilweise in die als NH₃-Waschkolonne ausgebildete, zweite Trennkolonne (17) und teilweise in eine ebenfalls als NH₃-Waschkolonne ausgebildete, dritte Trennkolonne (23) eingeleitet wird, wobei das am Sumpf der zweiten Trennkolonne (17) abgezogene AMS oder AMP am Kopf der dritten Trennkolonne (23) zugegeben und in dieser Trennkolonne einer pH-Korrektur unterzogen wird.

5. Verfahren nach Anspruch 4, **dadurch gekennzeichnet, daß** der am Kopf der dritten Trennkolonne (23) abgezogene NH₃-beladene Dampfstrom in die zweite Trennkolonne (17) zurückgeleitet wird.

6. Verfahren nach Anspruch 1, **dadurch gekennzeichnet, daß** der in der ersten Trennkolonne ausgebildete, NH₃-beladene Gasstrom teilweise in eine als NH₃-Waschkolonne ausgebildete, weitere Trennkolonne (23) zwecks Herstellung und Gewinnung von Starkwasser (NH₄OH) eingeleitet wird, das dem am Sumpf der zweiten Trennkolonne (17) abgezogenen AMS oder AMP zur pH-Korrektur zugegeben wird.

7. Verfahren nach Anspruch 6, **dadurch gekennzeichnet, daß** in der ersten Trennkolonne (6) eine Rektifikation durchgeführt wird und der dabei gebildete NH₃-beladene Gasstrom (13) als Dampfstrom vorliegt.

8. Vorrichtung zum Durchführen eines Verfahrens zur Entfernung von Ammonium NH₄ aus Abwässern, insbesondere aus dem Zentratwasser einer Kläranlage, und zur Wertstoffgewinnung, nach einem der Ansprüche 1 bis 7, **gekennzeichnet durch**
eine erste Trennkolonne (6) zum Überführen des Ammoniums aus der wässrigen Phase in eine mit Ammoniak NH₃-beladene, einen Gasstrom (13) bildende Gasphase,
eine zweite Trennkolonne (17), deren Sumpf (18) mit dem Kopf (5) der ersten Trennkolonne (6) zwecks teilweisen Einleitens des NH₃-beladenen Gasstroms (13) verbunden ist und deren Kopf (19) an eine Leitung (20) zum Zugeben von Schwefelsäure oder Phosphorsäure zwecks Gewinnung des Wertstoffes Ammoniumsulfat AMS oder Ammoniumphosphat AMP angeschlossen ist, und
eine dritte Trennkolonne (23) zum Verarbeiten des restlichen Teils (24) des NH₃-beladenen Gasstroms (13) zum Anheben des pH-Wertes des Wertstoffs AMS oder AMP.

9. Vorrichtung nach Anspruch 8, **dadurch gekennzeichnet, daß** die erste Trennkolonne (6) eine Luftstrippkolonne und die zweite sowie die dritte Trennkolonne (17, 23) jeweils eine NH₃-Waschkolonne ist und der Kopf (5) der ersten Trennkolonne (6) ferner mit dem Sumpf (25) der dritten Trennkolonne (23) und der Sumpf (18) der zweiten Trennkolonne (17) mit dem Kopf (29) der dritten Trennkolonne (23) verbunden ist.

10. Vorrichtung nach Anspruch 9, **dadurch gekennzeichnet, daß** der Kopf (29) der dritten Trennkolonne (23) zwecks Zurückleitung des dort abgezogenen NH₃-beladenen Luftstroms (33) mit dem Sumpf (18) der zweiten Trennkolonne (17) verbunden und der Kopf (19) der zweiten Trennkolonne (17) zwecks Zurückleitung des dort abgezogenen, gereinigten Luftstroms (34) über ein Gebläse (35) mit dem Sumpf (11) der ersten Trennkolonne (6) verbunden ist.

11. Vorrichtung nach Anspruch 8, **dadurch gekennzeichnet, daß** die erste Trennkolonne (6) eine Dampfstrippkolonne und die zweite sowie die dritte Trennkolonne (17, 23) jeweils eine NH₃-Waschkolonne ist und der Kopf (5) der ersten Trennkolonne (6) ferner mit dem Sumpf (25) der dritten Trennkolonne (23) und der Sumpf (18) der zweiten Trennkolonne (17) mit dem Kopf (29) der dritten Trennkolonne (23) verbunden ist.

12. Vorrichtung nach Anspruch 11, **dadurch gekennzeichnet, daß** der Kopf (29) der dritten Trennkolonne (23) zwecks Zurückleitung des dort abgezogenen, NH₃-beladenen Dampfstromes (33) mit dem Sumpf (18) der zweiten Trennkolonne (17) verbunden ist.

13. Vorrichtung nach Anspruch 8, **dadurch gekennzeichnet, daß** die dritte Trennkolonne (23) eine weitere NH₃-Waschkolonne zum Herstellen und Gewinnen von Starkwasser NH₄OH (60) ist, deren Sumpf (25) mit demjenigen (18) der zweiten Trennkolonne (17) verbunden ist.

14. Vorrichtung nach Anspruch 13, **dadurch gekennzeichnet, daß** die erste Trennkolonne (6) eine Rektifizierkolonne mit Verstärkungsteil (54) und Abtriebsteil (55) ist, zwischen denen der Zulauf (2) des Abwassers angeordnet ist.

## Claims

1. Method of removing ammonia (NH₄) from wastewater, and in particular from the centrifugate from a wastewater treatment plant, and of obtaining recyclable material, having the following steps:
a. conversion, by means of a first separating column (6), of the ammonia from the aqueous phase into a gaseous phase charged with ammonia (NH₃) which forms a stream of gas,
b. introduction of the NH₃-charged stream of gas into a second separating column (17) and feeding into said second separating column (17) of sulphuric acid or phosphoric acid, for the purpose of obtaining in said column the recyclable material ammonium sulphate (AMS) or ammonium phosphate (AMP) at a pH of 2.0 to 3.8,
c. raising of the pH of the recyclable AMS or AMP material to at least 5.5 by the addition of NH₃ to whichever recyclable material is involved,
**characterised in that**
d. what is used as a source of NH₃ in step c) is part of the NH₃-charged flow of gas from the first separating column (6).

2. Method according to claim 1, **characterised in that** stripping with air is performed in the first separating column (6) and part of the NH₃-charged stream of gas (13) which is formed when this is done is introduced, in the form of a stream of air, into the second separating column (17), which is in the form of an NH₃-scrubbing column, and part is introduced, in the form of a stream of air, into a third separating column (23), which is likewise in the form of an NH₃-scrubbing column, the AMS or AMP which is withdrawn at the sump of the second separating column (17) being fed in at the head of the third separating column (23) and being subjected to a pH correction in this column.

3. Method according to claim 2, **characterised in that** the NH₃-charged stream of air which is withdrawn at the head of the third separating column (23) is fed back into the second separating column (17), and the cleaned stream of air which is withdrawn at the head of the second separating column (17) is fed back into the first separating column (6).

4. Method according to claim 1, **characterised in that** stripping with vapour is performed in the first separating column (6) and part of the NH₃-charged stream of gas which is formed when this is done is introduced, in the form of a stream of vapour, into the second separating column (17), which is in the form of an NH₃-scrubbing column, and part is introduced, in the form of a stream of vapour, into a third separating column (23), which is likewise in the form of an NH₃-scrubbing column, the AMS or AMP which is withdrawn at the sump of the second separating column (17) being fed in at the head of the third separating column (23) and being subjected to a pH correction in this separating column.

5. Method according to claim 4, **characterised in that** the NH₃-charged stream of vapour which is withdrawn at the head of the third separating column (23) is fed back into the second separating column (17).

6. Method according to claim 1, **characterised in that** part of the NH₃-charged stream of gas which is formed in the first separating column is introduced into a further separating column (23), which is in the form of an NH₃-scrubbing column, for the purpose of producing and obtaining ammonia water (NH₄OH), which is fed to the AMS or AMP withdrawn at the sump of the second separating column (17) to correct its pH.

7. Method according to claim 6, **characterised in that** rectification is performed in the first separating column (6) and the NH₃-charged stream of gas (13) which is formed when this is done exists as a stream of vapour.

8. Apparatus for carrying out a method of removing ammonia (NH₄) from wastewater, and in particular from the centrifugate from a wastewater treatment plant, and of obtaining recyclable material, according to one of claims 1 to 7, **characterised by**
a first separating column (6) for converting ammonia from the aqueous phase into a gaseous phase which forms a stream of gas (13) charged with ammonia (NH₃),
a second separating column (17) whose sump (18) is connected to the head (5) of the first separating column (6) for the purpose of introducing part of the NH₃-charged stream of gas (13), and whose head (19) is connected to a duct (20) for feeding in sulphuric acid or phosphoric acid for the purpose of obtaining the recyclable material ammonium sulphate (AMS) or ammonium phosphate (AMP), and
a third separating column (23) for processing the remainder (24) of the NH₃-charged stream of gas (13) to raise the pH of the recyclable AMS or AMP material.

9. Apparatus according to claim 8, **characterised in that** the first separating column (6) is an air-stripping column and the second and third separating columns (17, 23) are each NH₃-scrubbing columns, and the head (5) of the first separating column (6) is also connected to the sump (25) of the third separating column (23) and the sump (18) of the second separating column (17) is connected to the head (29) of the third separating column (23).

10. Apparatus according to claim 9, **characterised in that** the head (29) of the third separating column (23) is connected to the sump (18) of the second separating column (17) for the purpose of feeding back the NH₃-charged stream of air (33) which is withdrawn from the head (29) of the third separating column (23), and the head (19) of the second separating column (17) is connected, via a blower (35), to the sump (11) of the first separating column (6) for the purpose of feeding back the cleaned stream of air (34)which is withdrawn from the head (19) of the second separating column (17).

11. Apparatus according to claim 8, **characterised in that** the first separating column (6) is an air-stripping column and the second and third separating columns (17, 23) are each NH₃-scrubbing columns, and the head (5) of the first separating column (6) is also connected to the sump (25) of the third separating column (23) and the sump (18) of the second separating column (17) is connected to the head (29) of the third separating column (23).

12. Apparatus according to claim 11, **characterised in that** the head (29) of the third separating column (23) is connected to the sump (18) of the second separating column (17) for the purpose for feeding back the NH₃-charged stream of vapour (33)which is withdrawn from the head (29) of the third separating column (23).

13. Apparatus according to claim 8, **characterised in that** the third separating column (23) is a further NH₃-scrubbing column for producing and obtaining ammonia water NH₄OH (60), whose sump (25) is connected to that (18) of the second separating column (17).

14. Apparatus according to claim 13, **characterised in that** the first separating column (6) is a rectifying column having an enriching part (54) and a driving-off part (55), between which the inlet (2) for the wastewater is arranged.

## Revendications

1. Procédé pour l'élimination de l'ammonium (NH₄) des eaux usées, en particulier de l'eau centrifugée d'une station d'épuration, et pour la récupération de matières utiles, comprenant les étapes suivantes :
a) transformer l'ammonium de la phase aqueuse en une phase gazeuse chargée d'ammoniac (NH₃) et formant un courant de gaz, au moyen d'une première colonne de séparation (6) ;
b) introduire le courant de gaz chargé en NH₃ et ajouter de l'acide sulfurique ou de l'acide phosphorique dans une deuxième colonne de séparation (17) en vue de récupérer la matière utile sulfate d'ammonium (AMS) ou phosphate d'ammonium (AMP) dans cette colonne avec une valeur du pH de 2,0 à 3,8 ;
c) relever la valeur du pH de la matière utile AMS ou AMP à au moins 5,5 par addition de NH₃ à la matière utile respective ;
**caractérisé en ce qu'**en tant que source de NH₃, dans l'étape c), une partie du courant de gaz chargé en NH₃ de la première colonne de séparation (6) est utilisée.

2. Procédé selon la revendication 1, **caractérisé en ce que** dans la première colonne de séparation (6), un « stripping » à l'air est exécuté et le courant de gaz chargé de NH₃ (13) qui est alors formé est introduit en tant que courant d'air en partie dans la deuxième colonne de séparation (17), conçue comme une colonne de lavage de NH₃, et en partie dans une troisième colonne de séparation (23), également conçue comme une colonne de lavage de NH₃, dans lequel l'AMS ou l'AMP soutiré au pied de la deuxième colonne de séparation (17) est ajouté au niveau de la tête de la troisième colonne de séparation (23) et soumis à une correction de pH dans cette colonne.

3. Procédé selon la revendication 2, **caractérisé en ce que** le courant d'air chargé en NH₃, soutiré en tête de la troisième colonne de séparation (23), est ramené dans la deuxième colonne de séparation (17) et le courant d'air purifié, soutiré en tête de la deuxième colonne de séparation (17) est ramené dans la première colonne de séparation (6).

4. Procédé selon la revendication 1, **caractérisé en ce que** dans la première colonne de séparation (6), un « stripping » à la vapeur est exécuté et le courant de gaz chargé NH₃ qui est ainsi formé est introduit en tant que courant de vapeur en partie dans la deuxième colonne de séparation (17), conçue comme une colonne de lavage de NH₃, et en partie dans la troisième colonne de séparation (23), également conçue comme une colonne de lavage NH₃, dans lequel l'AMS ou l'AMP soutiré au pied de la deuxième colonne de séparation (17) est ajouté en tête de la troisième colonne de séparation (23) et est soumis à une correction de pH dans cette colonne de séparation.

5. Procédé selon la revendication 4, **caractérisé en ce que** le courant de vapeur chargé en NH₃ soutiré en tête de la troisième colonne de séparation (23) est ramené dans la deuxième colonne de séparation (17).

6. Procédé selon la revendication 1, **caractérisé en ce que** le courant de gaz chargé en NH₃ formé dans la première colonne de séparation est introduit en partie dans une colonne de séparation supplémentaire (23), conçue comme une colonne de lavage de NH₃, en vue de produire et de récupérer de l'ammoniaque (NH₄OH) qui est ajoutée à l'AMS ou à l'AMP soutiré au pied de la deuxième colonne de séparation (17) pour la correction du pH.

7. Procédé selon la revendication 6, **caractérisé en ce que** dans la première colonne de séparation (6), une rectification est effectuée et le courant de gaz chargé en NH₃ (13), qui est ainsi formé, est présent sous forme de courant de vapeur.

8. Dispositif pour exécuter un procédé pour l'élimination de l'ammonium NH₄ des eaux usées, en particulier de l'eau centrifugée d'une station d'épuration, et pour la récupération de matières utiles, selon l'une quelconque des revendications 1 à 7, **caractérisé par**
une première colonne de séparation (6) pour transformer l'ammonium de la phase aqueuse en une phase gazeuse chargée d'ammoniaque (NH₃) et formant un courant de gaz (13) ;
une deuxième colonne de séparation (17), dont le pied (18) est relié à la tête (5) de la première colonne de séparation (6) en vue d'une introduction partielle du courant de gaz chargé en NH₃ (13), et dont la tête (19) est raccordée à une conduite (20) pour ajouter de l'acide sulfurique ou de l'acide phosphorique en vue de récupérer la matière utile sulfate d'ammonium (AMS) ou phosphate d'ammonium (AMP) ; et
une troisième colonne de séparation (23) pour traiter la partie restante (24) du courant de gaz chargé en NH₃ (13) afin de relever la valeur du pH de la matière utile AMS ou AMP.

9. Dispositif selon la revendication 8, **caractérisé en ce que** la première colonne de séparation (6) est une colonne de « stripping » à l'air et la deuxième ainsi que la troisième colonne de séparation (17, 23) sont respectivement une colonne de lavage de NH₃, et la tête (5) de la première colonne de séparation (6) est en outre reliée au pied (25) de la troisième colonne de séparation (23), et le pied (18) de la deuxième colonne de séparation (17) est relié à la tête (29) de la troisième colonne de séparation (23).

10. Dispositif selon la revendication 9, **caractérisé en ce que** la tête (29) de la troisième colonne de séparation (23) est reliée, en vue de ramener le courant d'air chargé en NH₃ (33) qui y est soutiré, au pied (18) de la deuxième colonne de séparation (17), et la tête (19) de la deuxième colonne de séparation (17) est reliée, en vue du recyclage du courant d'air purifié (34) qui y est soutiré, par l'intermédiaire d'un ventilateur (35) au pied (11) de la première colonne de séparation (6).

11. Dispositif selon la revendication 8, **caractérisé en ce que** la première colonne de séparation (6) est une colonne de « stripping » à la vapeur et la deuxième ainsi que la troisième colonne de séparation (17, 23) sont respectivement une colonne de lavage de NH₃, et la tête (5) de la première colonne de séparation (6) est en outre reliée au pied (25) de la troisième colonne de séparation (23), et le pied (18) de la deuxième colonne de séparation (17) est relié à la tête (29) de la troisième colonne de séparation (23).

12. Dispositif selon la revendication 11, **caractérisé en ce que** la tête (29) de la troisième colonne de séparation (23) est reliée, en vue du recyclage du courant de vapeur chargé NH₃ (33) qui y est soutiré, au pied (18) de la deuxième colonne de séparation (17).

13. Dispositif selon la revendication 8, **caractérisé en ce que** la troisième colonne de séparation (23) est une colonne de lavage de NH₃ supplémentaire pour produire et récupérer de l'ammoniaque NH₄OH (60) dont le pied (25) est relié à celui (18) de la deuxième colonne de séparation (17).

14. Dispositif selon la revendication 13, **caractérisé en ce que** la première colonne de séparation (6) est une colonne de rectification avec une partie de concentration (54) et une partie d'appauvrissement (55) entre lesquelles est disposée l'admission (2) des eaux usées.
